# EUROPEAN PATENT APPLICATION

(11) **EP 3 764 023 A1**
(43) Date of publication of application: **13.01.2021**
(21) Application number: 20182968.6
(22) Date of filing: 29.06.2020
(51) Int. Cl.: F24S 10/25, F24S 10/20, F24S 10/30, F24S 10/70, C02F 1/14, F24S 60/30

(54) **SELF-CONTAINED SOLAR WATER HEATER**

(30) Priority: 08.07.2019 GB 201909782
(71) Applicant: Clark, Dhugal, Manchester, Lancashire M20 6RH (GB)
(72) Inventor: Clark, Dhugal, Manchester, Lancashire M20 6RH (GB)

(57) **Abstract**

A self-contained solar water heater has a dimensional tank 1 having an interior chamber 4 formed within it. Interior surfaces 9 which retain the heat store means which stores the solar energy are covered with an insulation layer 3. The tank 1 has an opening on at least one side whereon a screen sheet 2 is attached. The interior chamber 4 defines a space that can be filled with a heat retaining material such as oil. A pipe 10 (figure 3) which articulates through the interior chamber 4, in several windings to form a coil has an inlet 5 and an outlet 8, and can receive fluid such as potable water (not shown) from a water source, in use the water flowing into the inlet 4, to slowly pass through the body of the pipe 10, and to exit out of an outlet 8 which can be connected to a showerhead, a hot water tap or to another system requiring hot potable water. The solar heater can be made from sheet metal or a durable polycarbonate plastics material, and is painted black on the outside. It can be used on boats or caravans, to heat a small amount of water.

## Description

### Field of the Invention

The present invention relates to eco-friendly self-contained solar water heaters for use on mobile craft. More particularly, but not exclusively, it relates to an eco-friendly solar water heater without a hot water storage tank, which uses heat exchange mediums isolated from direct contact with the potable water that is to be heated.

### Background of the Invention

Conventional domestic solar water heaters typically store hot water in a hot water storage tank. The water in the storage tank may be heated either directly as it passes through the solar panels or by indirect transfer of heat through a heat exchanger using a solar energy transfer fluid. This fluid may be used in a closed loop system which includes the solar panel, a pump and a heat exchanger that transfers heat from the fluid to the water in the storage tank.

Solar water heaters that have heat conducting mediums for use on mobile craft (i.e. small boats, motor homes and caravans) are designed to be simple and lightweight so as to be able to heat efficiently and inexpensively a relatively small volume of water, for subsequent use soon after without storing the water in a tank. Further, some of these are portable and designed to be easily installable atop the craft (to be removable when necessary), while not adding too much weight to the mobile craft's overall construction.

Conventional domestic solar water heaters are not suited to most mobile craft. It is impractical and potentially dangerous to have a large and heavy hot water tank above a motor vehicle or yacht, and most such vehicles have limited space for a hot water tank inside. There is usually insufficient space for the associated plumbing which is typical for pumped solar heating systems, creating impediments to mechanical circulation of solar heated fluid in mobile craft. Further those with such mobile craft are generally used to economising on water usage so large storage tanks of hot water are not necessary.

One shortcoming of most hot water storage tanks for conventional water heating systems used in mobile craft is the potential occurrence of legionella pneuomophila bacteria, which causes legionnaires disease - a lung infection whose symptoms include severe flu, high temperatures, shivering and chest pain. The bacteria thrive in warm temperatures between 20°C to 45°C, in stagnant water environments such as hot water cylinders. Legionnaire's disease can be fatal to the elderly, smokers, people with pre-existing conditions, such as diabetes, lung or heart disease, or those who have problems with immunosuppression. Since many mobile craft are used sporadically, and seasonally, mostly during the warm summer months, hot water storage tanks can make perfect breeding grounds for the legionella bacteria if the water temperature remains between 20°C - 45°C, and can represent a serious health challenge.

Traditionally, the main approach in reducing the advent of legionella pneuomophila in tanks of mobile craft is maintaining the water temperature above a relatively high threshold, typically above 60°C. However, this approach cannot be infallible.

CN103322700 (B**)** discloses a solar water heater which comprises a high-temperature oil tank, a vacuum tube insulation box, a vacuum tube, and a water tube heat exchanger. The tank is filled with oil which is used to transfer heat, and its external surface is covered by an insulation cover. The outer walls of the tank and the inner wall of the insulating cover have "radiation-proof" aluminium insulation films. One end of the vacuum tube passes through the insulating cover into the high-temperature oil tank, whereas a lower end is disposed into a box shell that has vacuum glass and foamed plastic boards. The box shell is made from a stamped stainless steel sheet, with the foamed plastic boards lining the inner surface of the box shell. The inner surface of each foamed plastic board is covered with some radiation-proof aluminium film, and black heat-absorbing insulating cotton is disposed on the aluminium radiation-proof film. The upper portion of the black heat-absorbing insulating cotton is connected with the lower semi-circular surface of the vacuum tube.

**JPS56162353 (A)** discloses a water heater that has an upper surface of a heat collector 1 which is densely covered with small-aperture lenses 3 and large-aperture lenses 2 and a water tank. A heat-exchanger divides an oil tank 5, from the water tank 10, and is disposed below the heat collector 1. An inlet pipe 6 feeds oil into the oil tank 5 and heated oil is drawn to a heat accumulator through a discharge pipe 8. The heat exchanger is located in a focus position of the large-aperture and small-aperture lenses, to enable solar energy to heat the oil. Water is fed to the water tank through an inlet pipe 11, and hot water is discharged through a hot water discharge pipe 12. Thermal conduction facilitates heat exchange between the oil tank and the water tank using the heat- exchanger.

CN 108895677 discloses a solar water heater for domestic residential or commercial buildings use which addresses the problem of intermittent sunlight to heat water, and which discloses a solution of using a heat storage material which changes phase to retain additional heat due to the latent heat of the material. The phase change material undergoes a change in volume when transitioning between states.

Devices according to the prior art teaching are not ideally suited for the task of use as solar water heaters for a number of reasons. While metals such as copper and aluminium can go some way to eliminating the challenge of the poor heat transfer, aluminium is quite corrosive when exposed to water, in particular when exposed to water of a relatively low pH. Furthermore, connecting an aluminium surface to a dissimilar metal can cause galvanisation. Similarly, while foam can provide superior insulation properties, exposure to UV light will overtime reduce the optimum operating performance of foam, negatively affecting the insulation properties of the system. In addition, looking at the images of devices of the prior art, it doesn't appear as though the heat exchange between the heat collectors and the water to be heated would be efficient. Using a barrel for example would not result in the same heat transfer properties as using a flat box. The absence of piping creating ample surface area would probably result in significant heat loss, which is undesirable. Further, these devices appear bulky and may be difficult to install in small spaces, or above spaces where access is restricted. In addition, vacuum tubes are delicate, thereby not suited to use on mobile craft, and they can be costly. They require more maintenance than glycol filled tanks, and can overheat when installed on flat roofs in an oversized system, or when installed in systems that have relatively slow circulation. Thus, they are unsuitable for use on mobile craft, which may not have the kind of plumbing, pumps or electrics installed to properly cater to various specialised technical considerations.

Further, almost all hot water storage systems may receive potable cold water at their input, but their output of hot water is unlikely to be potable. This is due to a range of factors, including the risks associated with legionnaires previously advised, and in addition, potential issues with sediment and scaling, within hot water storage tanks.

It is an object of the present invention to obviate the problems that beset solar water heaters of the prior art, and present a lightweight and eco-friendly solar water heater for use to heat water on small, that is efficient to use, that is user-friendly and is cost-effective to manufacture, and from which potable water may be drawn.

### Summary of the Invention

According to a first aspect of the present invention there is provided a self-contained solar water heater for producing potable hot water, said water heater comprising:
a tank having a plurality of inner surfaces and a plurality of outer surfaces;
said tank having an interior chamber formed within it;
an insulation layer disposed adjacent a portion of the tank's outer surfaces;
the tank being provided with a screen disposed on at least one said surface;
the screen being adapted to allow the energy from solar radiation onto at least one surface of the said tank onto which the screen is disposed, to allow said solar energy to be absorbed by said surface;
a heat retaining liquid which can retain heat from said solar energy, said heat retaining liquid being contained within said interior chamber;
said heat retaining liquid remaining as a liquid over a temperature range of 30°C to 95°C;
a pipe which winds through said interior chamber and through said liquid heat retaining means;
wherein in use the pipe is adapted to receive water that can be fed into it from a water source, the water flowing through the pipe to be heated by said solar energy which is absorbed by said tank's surface and which is transferred as heat energy to the pipe by said heat retaining liquid.

For the heat retaining liquid to remain as a liquid over the range of operating temperatures which the solar water may experience use, preferably the heat retaining liquid has a freezing point temperature selected from the set -40°C; -3°C; -17°C; 0°C; 5°C; 7°C; 30°C and a boiling point temperature selected from the set 95°C; 100°C; 104°C; 190°C; 200°C; 227°C, at atmospheric pressure. However, other heat retaining liquids may be used which remain liquid over any range of operating temperatures within the widest temperature range stated above.

In the general case, any liquid which has a freezing point at a temperature of -40°C and above, and a boiling point at a temperature 227°C or below at atmospheric pressure may be used as the heat retaining liquid. The upper and lower liquid temperatures may be selected over any range within the above temperatures.

Examples of temperature ranges for suitable heat retaining liquids, where the material remains liquid at atmospheric pressure are: 7°C to 99°C; 0°C to 100°C; 5°C to 200°C; -3°C to 200°C; -17°C to 227°C; -40°C to 190°C.

In preferred embodiments, the heat retaining liquid does not freeze at temperatures above the freezing point of water. Suitably, the heat retaining liquid remains liquid over a temperature range -3°C to 200°, and preferably in a range -17°C to 227°C.

However some solidification of the heat retaining liquid may be tolerated at or around the freezing point of water, in which case the heat retaining liquid may remain a liquid over the temperature range 2°C to 200°C.

However for liquids which have a relatively higher thermal capacity, or a restricted liquid temperature range may be tolerated as a trade-off for the higher thermal capacity, in which case the heat retaining liquid preferably remains liquid over a temperature range 30°C to 104°C at atmospheric pressure, and should remain liquid over a core temperature range of at least 30°C to 95°.

Preferably the heat retaining liquid does not evaporate and turn to gas at internal or external temperatures which the solar water heater may experience, and so preferably the heat retaining liquid remains liquid up to a temperature of 200°C. However a waterless heat transfer liquid having a boiling point of 190°C may be used, which should still give good protection against boiling of the heat retaining liquid over most temperatures which the solar water heater may experience.

In variations of the embodiments, the heat absorbing surface may comprise a heat absorbing coating on the underside of the transparent or translucent screen, or may be provided as a surface on a second sheet of material which may either be in contact with the underside of the screen, or which may be spaced apart from the underside of the screen.

In various embodiments, the surface on which the screen is disposed and the screen may form a single component, for example said surface may be coated onto an underside of the screen. In other embodiments the screen and the surface may be formed of separate and different sheets of material. A first sheet of material comprising the screen and a second sheet of material forming the surface may be bonded together to a composite sheet. Alternatively, a first sheet of material comprising the screen may be spaced apart from a second sheet of material comprising the surface and there may be a gap or cavity between the first and second sheet. The gap or cavity may be filled with air or with an inert gas, or thermally insulating gas. In yet further variations, there may be provided a third sheet of material interposed between the first sheet comprising the screen, and the second sheet comprising the surface, wherein the third sheet of material is transparent translucent to light of visible frequencies and above, and there may be a first cavity between the first third sheets, and a second cavity between the second and third sheets. Each cavity may be filled with air or another thermally insulating gas which is transparent or translucent to solar light.

Although the ambient outside operating temperature range of the solar water heater may extend over the range -40°C to 56°C depending upon the climate and weather, if there are reflections of sunlight from nearby objects the upper temperature experienced locally on parts of the surface of the solar water heater may exceed 56°C. In prototype embodiments, the internal temperature of the tank has risen to 104°C, and the water in the pipe has been kept under pressure of above 1 bar which has prevented it boiling within the solar water heater.

If the heat retaining liquid boils to gas, then its heat transfer properties are severely reduced and its function of absorbing heat from the solar heated surface, retaining heat, transporting heat by conduction and/ or convection between the solar heated surface and the pipe, and transferring heat to the pipe is significantly compromised. Therefore it is important that the heat retaining liquid does not boil to form a gas or freeze to form a solid over the operating temperature range of the solar water heater, and over the range of internal and external temperatures which may be experienced by the solar water heater, and which may lie outside the ambient air temperature range encountered by the solar water heater.

The "normal" temperature range of potable water is from 1°C to 99°C. To gain the advantage of heating water to improve its potability, the temperature range to which the water would be heated to in order to improve its potability is suitably in the range 60°C to 95°C, in order that bacteria can be eliminated. The heat retaining liquid preferably stays in a liquid state over a wider temperature range than the temperature range over which the water is heated, but should stay liquid over the temperature range 7°C to 95°C.

Preferably, the tank comprises a substantially flat tank capable of holding a liquid. The tank may comprise a substantially shallow cuboidal tank.

The tank may comprise a suitably shaped tank such as a square, rectangular, cylindrical or frusto-conical tank. Preferably, the tank is adapted to absorb solar radiation from the sun. The tank can absorb solar energy from the sun's rays.

The interior chamber's heat retaining means may comprise a heat retaining substance with nanoparticles. Particles of high heat capacity solids may be suspended in the liquid, such as Phenol-formaldehyde compounds to improve the heat capacity of the liquid. The particles may comprise timber and/ or particles of plastics material.

The interior chamber's heat retaining liquid may comprise graphene particles and/or crystals carried in suspension in the liquid. The heat retaining liquid may contain solid nano particles of Phenol-formaldehyde compounds (Bakelite) and/ or particles of solids having a specific heat in the range 2,500 - 6,000 J/kg C. Where particles of solid are suspended in the heat retaining liquid, throughout the range of temperatures experienced both internally and externally by the solar water heater, the particles of solid remain solid, and the heat retaining liquid remains liquid.

Preferably, the interior chamber's heat retaining liquid comprises a viscous liquid such as one or more type(s) of oil. The heat retaining liquid may comprise Glycerol^{(RTM)} Optionally the heat retaining liquid may comprise a synthetic oil.

The heat retaining liquid in use functions as a heat store for both retaining heat, and functions as a heat transfer means for transferring heat between the heat absorbing surface and the pipe.

Preferably, the heat retaining liquid is pre-filled into the interior chamber, before use and before the interior chamber is sealed. The heat retaining liquid can be heated before filling it into the interior chamber at a temperature above ambient temperature. The heat retaining liquid is pre-filled into the interior chamber at a temperature above ambient temperature, to account for thermal expansion after sealing. Preferably the heat retaining liquid absorbs solar energy that has been absorbed by the tank.

The heat retaining liquid can absorb heat energy from the internal surface of the tank after the tank has been heated by solar energy. The heat retaining liquid is adapted to transfer the absorbed energy from the tank to the pipe means.

Preferably, the tank is provided with a screen means, fixedly disposable on at least one area of the surface of the tank. The screen means may comprise a glass or Perspex^{(RTM)} material, or other translucent material. The screen means is adapted to allow solar radiation onto a surface of the tank onto which the screen means is disposed. The screen means allows solar radiation onto a surface of the tank on which the screen means is located, to be absorbed by the surface.

Preferably the screen means comprises a substantially transparent sheet of glass or plastics material disposable on an upper-facing side of the tank.

Alternatively, the screen means comprises a substantially translucent sheet of glass or plastics material disposable on an upper side of the tank. The screen means may comprise other suitable sheet material disposable on an upper side of the tank, capable of allowing solar radiation on to the outside of the tank and that energy to reach the interior chamber. The screen means may comprise a window onto the upper surface of the tank. Preferably, the screen means may comprise multiple layers of material in a single unit. The screen means may comprise multiple layers of material such as glass or Perspex^{(RTM)} in a single unit separated by a gas, a vacuum or a suitable insulator.

Preferably, the pipe means comprises an elongate hollow metal pipe having an inlet means at one end, a hollow interior, and an outlet means at another end. The pipe means may comprise a winding hollow metal pipe with an inlet means at one end and an outlet means at another end. The pipe means may comprise a hollow metal pipe with an inlet means at one end and an outlet means at another end. The pipe means comprises a hollow pipe with good thermal conduction properties.

Alternatively, the pipe means may comprise at least one sealed plate means within the interior chamber, the plate means having a hollow portion with an inlet and an outlet, through which water may flow. The pipe means may comprise at least one sealed plate means for use in transferring heat from the heat retaining liquid, to the water that is in the hollow portion of the plate means.

Preferably, the pipe means has an inlet means comprising a water inlet in use for connection to a water source such as a cold water tap. The pipe means has an outlet means comprising a water outlet in use for water that flows from the inlet and through the interior of the pipe means to exit the pipe means therefrom.

The outlet means may be connectable to a utility device such as a hot water shower system. The outlet means may be connectable to a tap supplying hot water.

Preferably, the interior chamber comprises a sealed interior chamber. The interior chamber comprises a sealed airtight interior chamber. The interior chamber preferably comprises a sealed watertight interior chamber.

The interior chamber is preferably sealed to prevent leakage of the said heat retaining liquid from it. Preferably, a large portion of the outer surface of the interior chamber is provided with insulation means disposed generally adjacent the external walls. The insulation means preferably substantially engulfs the tank, save for the screen.

Preferably, the space of the interior chamber has pipe means occupying part of its volume. The space of the interior chamber has a length of pipe winding through a substantial section of its volume.

Preferably, the pipe means has substantially round surfaces, to facilitate thermal heat exchange. Alternatively, the pipe means has substantially planar surfaces.

The pipe means articulates through a significant portion of the interior chamber. The length of pipe winding through the space in the interior chamber in use maximizes the surface area required for heat transfer from the heat retaining liquid to the pipe and any water that may be within the pipe.

Preferably, the interior chamber is in fluid isolation from the interior of the pipe. The interior chamber is in fluid communication with the surface of the pipe. The heat retaining liquid within the interior chamber is in fluid isolation from the interior of the pipe. The heat retaining liquid within the interior chamber is isolated from the interior of the pipe.

Preferably, the interior chamber is provided with a mesh means, located within it, and adjacent the pipe, for improved heat transfer to the pipe. Alternatively, suitable fins may be attached to the pipe to improve heat transfer to the pipe.

According to a second aspect there is provided a solar water heater for producing potable hot water, said water heater comprising:
a tank having a plurality of inner surfaces and a plurality of outer surfaces;
said tank having an interior chamber formed within it;
an insulation layer disposed adjacent a portion of the tank's outer surfaces;
the tank being provided with a screen disposed on at least one said surface;
the screen being adapted to allow solar energy onto said at least one surface of the tank onto which the screen is disposed, to allow said solar energy to be absorbed by said surface;
a heat retaining liquid which can retain heat from said solar energy, said heat retaining liquid being contained within said interior chamber;
wherein said heat retaining liquid would already be in a liquid state at ambient air temperatures at sunrise when in situ; and
wherein said heat retaining liquid does not then change phase during the storage of solar energy; and
a pipe which winds through said interior chamber and through said heat retaining liquid;
wherein in use the pipe is adapted to receive water that can be fed into it from a water source.

Suitably, the heat retaining liquid does not change phase at the ambient temperatures experienced inside and on the outside surface of the solar water heater.

Other aspects of the invention are as recited in the claims herein, which are incorporated into this summary by reference.

### Brief Description of the Drawings

An embodiment of the present invention will now be more particularly described by way of example, and with reference to the figures of the accompanying drawings, in which:
Figure 1 is a perspective view of the solar water heater, showing the tank, insulation and inlet and outlet pipes;
Figure 2 is a frontal view of the solar water heater, showing the position of the screen, pipe and insulation;
Figure 3 is a sectional view of the solar water heater, showing the position of the screen, pipe, inlet, outlet and insulation.
Figures 4i & 4ii are a top and sectional view of the solar water heater, showing the position of a solar absorption surface with a reduced area of the tank exposed to the sun.
Figure 5 is a side view of the solar water heater, showing the position of a plate heat exchanger within the inner chamber, and a material connection between the tank and the surface of the solar absorption surface.
Figures 6i & 6ii are a side and top view of the solar water heater, showing the position of a solar absorption surface with an increased surface area, around the periphery of the tank.
Figure 7 is a side view of the solar water heater, showing an alternative embodiment of the tank, with a screen and a coil.
Figure 8 is a side view of the solar water heater, showing heat retaining liquid circulating through a pipe which is in direct contact with the heat absorption plate.
Figure 9 is a side view of the solar water heater, showing a pump to facilitate circulation of the heat retaining liquid past the solar absorption surface.
Figure 10 is a side view of the solar water heater, showing a valve mechanism to allow directional flow of the heat retaining liquid into an insulated heat retaining area to limit heat loss when the sun is not heating the absorption plate.
Figure 11 is a side view of the solar water heater, showing the position of an inner enclosure within the tank, to improve frost protection of the pipework.

### Details Description of the Embodiments

There will now be described by way of example several modes contemplated by the inventors. In the following description numerous specific details are set forth in order to provide a thorough understanding. It will be apparent however, to one skilled in the art, that the present invention may be practiced without limitation to these specific details. In other instances, well known methods and structures have not been described in detail so as not to unnecessarily obscure the description. For clarity, some diagrams have material aspects of the invention omitted.

Embodiments disclosed herein may be suitable for boats or marine vessels and may be best used in summer and in warm or hot climates, for example the Mediterranean or Adriatic. Typically, from September to May, most boats moor in ports with access to quayside electricity to heat their water, and during this period sunshine hours are not reliable, the days are shorter, and the angle of the sun is lower making collection of significant solar energy more difficult. However in summer, ports and harbours increase their mooring fees due to increased demand for port spaces and so some yachts go on anchor to avoid harbour fees. This means that they need to run their engines for half an hour or so, so that hot water comes from heat transfer via the engine coolant to produce hot water, or they can use solar energy. Sailing boats on passages also need hot water, and may run their engines for the purpose of producing hot water causing unnecessarily pollution. Other yachts or pleasure vessels may not have an engine that is able to provide a hot or potable water system.

Daytime air temperatures around the Mediterranean may typically range from 3°C to 45°C. During a heatwave, the air temperature may not fall below 30°C even overnight. Typical water temperatures in winter around the Mediterranean or Adriatic may be 10°C to 15°C.

In summer in Spain, the ambient air temperature may still be 30°C at sunrise in the peak of summer, but could sustain 20°C at sunrise during August and may fall to 10°C in autumn or spring, and down to 1°C in winter. However typical water temperatures in a warm climate in summer for example around Barcelona in June-September are between 20°C and 25°C. A vessel's water tanks are normally below the waterline of the vessel's hull, so water stored in those tanks may be at or around that temperature. Hot water for a person is generally perceived as being around or above body temperature of 36.1°C, and hot showers generally need to supply water up to 38°C. Above this temperature a hot shower may become uncomfortable or dangerous. The embodiments herein may heat water to over 100°C, which is useful for hot drinks, but which can also be blended with cold water for showers or washing. Once water being heated falls to a temperature below 30°C it is not really "hot" water but rather is lukewarm. The embodiments disclosed herein are aimed at producing water that a person may perceive as being hot, that is, water at a temperature above 30°C.

In this specification the term "pipe" is used to denote a tubular structure, having first and second ends, having a length between said first and second ends, and having a wall between said first and second ends. The pipe wall may have a circular / annular cross section, a square or rectangular cross section, or any other suitable shape.

In the specification, where a range of operating temperatures is specified, these temperatures are specified at atmospheric pressure unless otherwise stated.

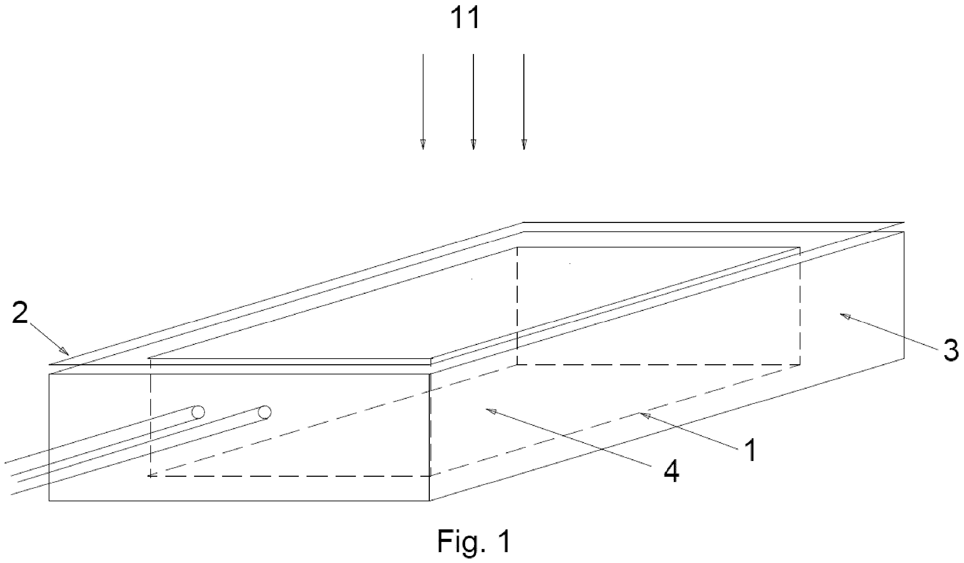

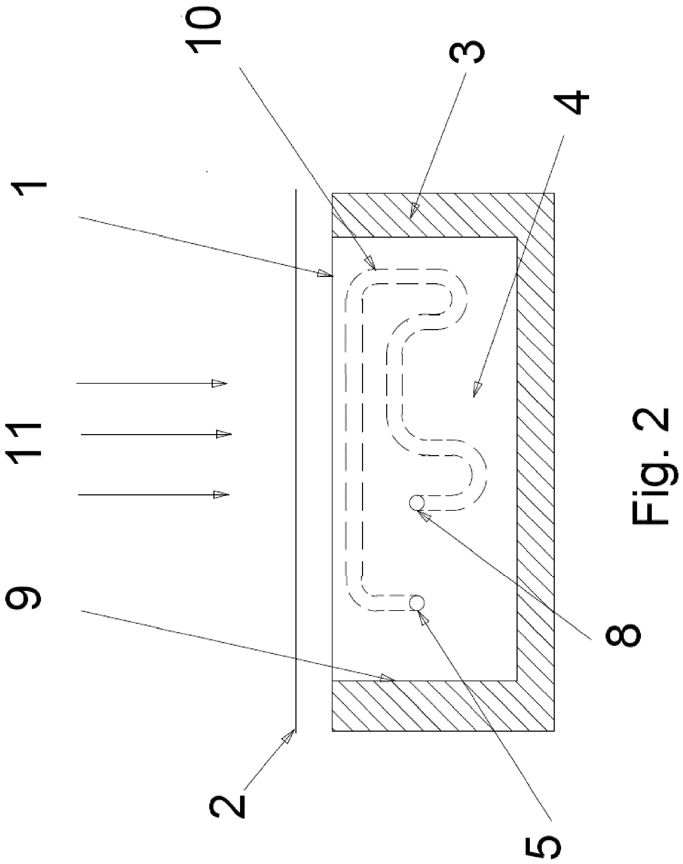

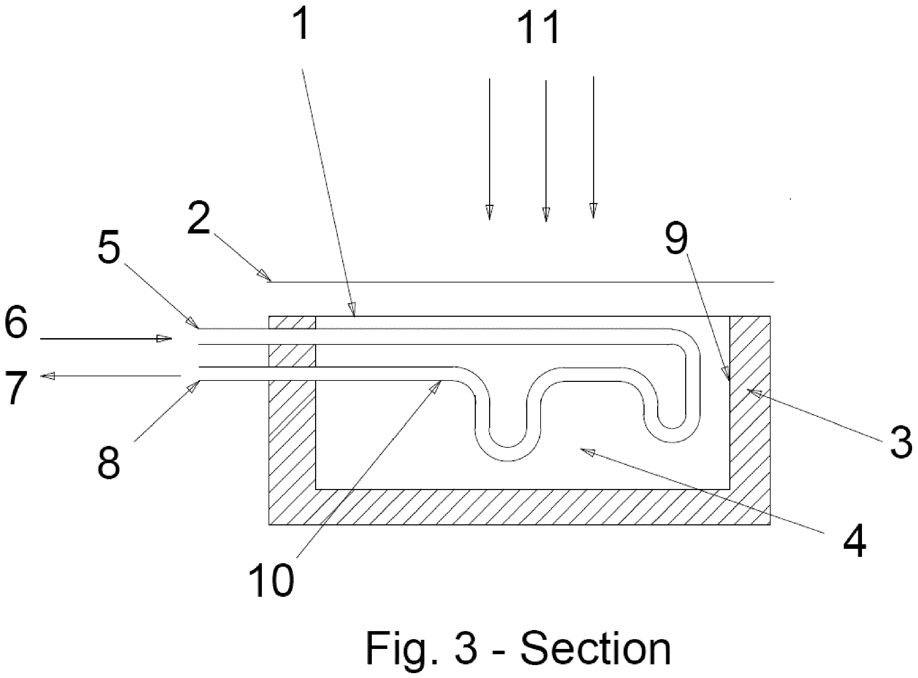

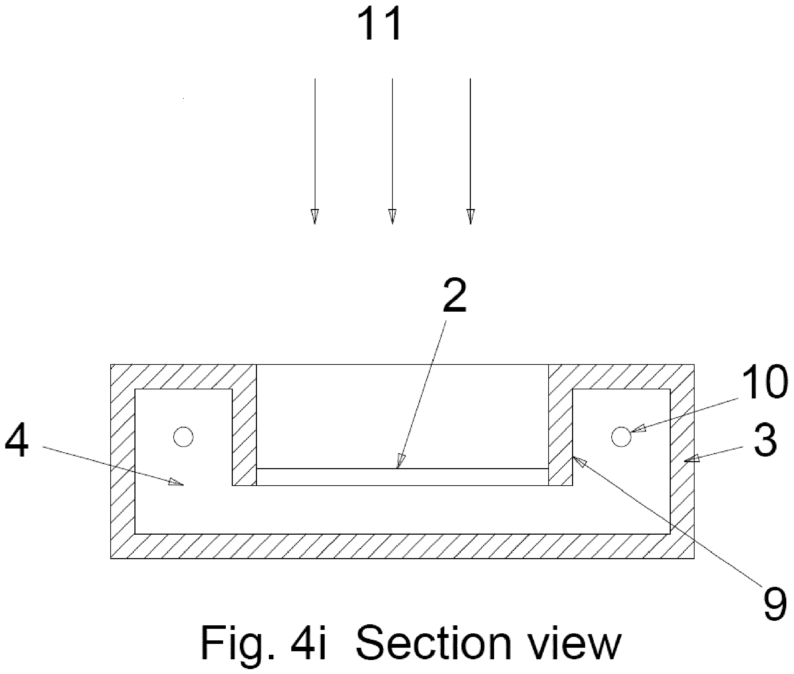

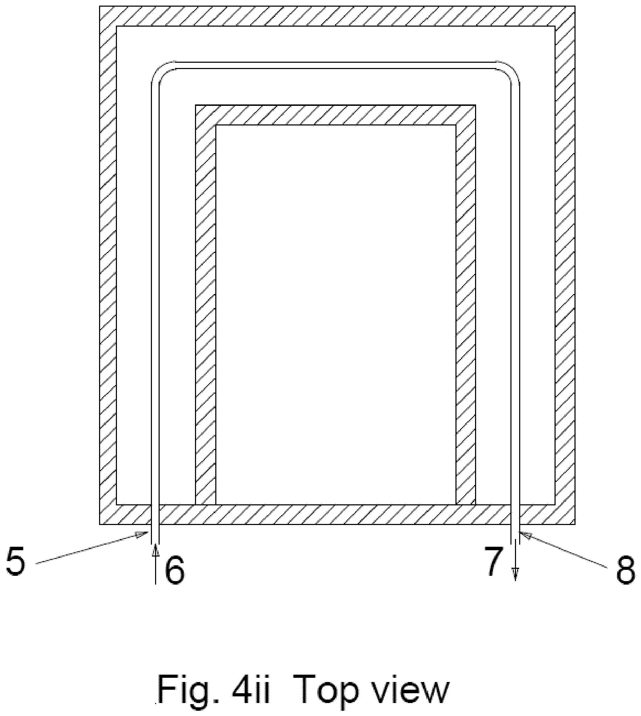

Referring now to figure 1, a self-contained solar water heater has a dimensional tank 1 having an interior chamber 4 (figure 2), formed within it, which has interior surfaces 9 and an insulation layer 3 disposed adjacent a substantial portion of the interior surfaces 9, the interior chamber 4 defining a space that can be filled with a heat retaining material. A pipe 10 (figure 3) which articulates through the interior chamber 4, in several windings has an inlet 5 and an outlet 8. Liquid such as water (not shown) from a water source can flow into the inlet 5 (generally in the direction of arrow 6), to slowly pass through the body of the pipe 10, and to exit out of the outlet 8 (generally in the direction of arrow 7), where a tap or shower can be connected. When installed onto the roof of a boat or caravan, the water in the pipe 10, can be heated by the solar energy 11 (figure 4) absorbed by the tanks surface, the heat being transferred from the outside of the tank to the inside, and into the heat retaining material, and from the heat retaining material, through the wall of the pipe 10 and into the water within the pipe 10.

For efficient absorption of solar heat, the tank 1 is designed to be capable of retaining a liquid and is substantially flat, with at least one flat face. This provides a greater surface area for solar radiation absorption. The tank 1 may be designed to take a suitable shaped form such as cuboidal, rectangular, square, cylinder, frusto-conical or other shape.

The tank 1 can be made from a hard and rigid material such as metal, in particular stainless steel, although other materials with suitable properties such as highly durable thermoplastic polymers (e.g. polycarbonates) can be used. Similarly, highly durable recycled plastics material can be used.

The heat retaining liquid to be used can be a material with a high specific heat capacity. This is advantageous because it works to absorb the energy of the sun's solar radiation. In the self-contained solar water heater, the heat retaining liquid can comprise a suitable viscous liquid that is able to retain heat. Organic or mineral nonpolar chemical substances such as sunflower oil can be used. It is important that the external surfaces of the tank 1 are given a dark colour such as black, for better absorption of radiation. Alternatively, the heat retaining liquid may comprise glycol, a glycol based liquid, ethylene glycol, and ethylene glycol based liquid, a mineral oil, a vegetable oil, a bio oil, a synthetic oil, a polyalphaolefin based oil, or Glycerol^{(RTM)}. In some embodiments, water may be used as the heat retaining liquid. The heat retaining liquid may have a specific heat capacity in the range 1,800 to 6,000 J/kg K, and preferably a heat retaining liquid having a specific heat capacity greater than that of water (4,183 j/kg.K at 20°C) is used.

The heat retaining liquid performs the function of absorbing and retaining heat absorbed from solar radiation incident on the solar heater, and distributing or transferring that heat to the pipe which contains a flow of water, so that heat from the solar energy is transferred via the heat retaining liquid and via the pipe to the potable water. Heat absorbed by the heat absorbing surface is transferred by conduction to the heat retaining liquid. The heat retaining liquid circulates throughout the tank and around the water containing pipe, carrying heat energy from the heat absorbing surface to the pipe. Heat transfers through the wall of the pipe to heat the flow of water contained within the pipe. The heat retaining liquid therefore acts both as a liquid which retains heat, and as a transfer medium which transfers heat to the pipe and hence to the water in the pipe. Preferably the heat retaining liquid has parameters as follows:

The range of temperatures over which the heat retaining liquid remains in a liquid state is preferably in the range -40°C to 227°C. However, some individual heat retaining liquids may have liquid phase ranges anywhere within the above temperature range. For example peanut oil may be used in embodiments where the internal temperature within the tank will remain above 0°C. Some heat retaining liquids may have a lower liquid temperature inside the above temperature range, whilst having an upper liquid temperature above 190°C. Sunflower oil has a liquid temperature range of -17°C to 227 °C at atmospheric pressure. Cotton seed oil remains liquid over a temperature range of -1°C to 216 °C at atmospheric pressure.

Under some circumstances, the interior of the tank may operate at pressures slightly above or below atmospheric pressure due to pressure building up or reducing in the tank through heating, in which case the liquid temperature ranges of the heat retaining liquid may vary slightly, but values for liquid range are stated at atmospheric pressure.

The range of viscosities of the heat retaining liquid, where the heat retaining liquid stays within its liquid state may be in accordance with the following examples:
- Kinematic viscosity at 40°C 0.2 cSt to 324 cSt
- Dynamic viscosity at 20°C - 0.5 to 2,500 cP.

The interior chamber 4 comprises a sealed interior enclosure that is airtight and watertight, to prevent leakage. This means the heat retaining material must be pre-filled into the interior chamber 4 via an opening, prior to the interior chamber being sealed. This can be done in a number of ways including by use of a hole that is subsequently sealed with a sump bolt or a suitable valve. The valve can also function to release excess pressure if ambient temperatures exceed the manufacturer specification for the operational temperatures of the tank.

To account for thermal expansion, it is advisable to pre-fill the interior chamber with the heat retaining means being at temperatures above ambient temperature. This can be achieved in a number of ways depending on what is used as the heat retaining means. However, if oil or a suitable liquid is used, the tank can be pre-filled with the oil, and the valve shut or the sump bolt tightened to seal the tank. The tank is then exposed to solar energy 11 or higher temperatures that raise the temperature of the liquid inside it to somewhere between 55°C to 60 °C (roughly between the midway to the maximum operating temperature), at which point the sump bolt is loosened or valve opened, to release the pressure, after which the sump bolt is re-tightened or the valve is closed again. Alternatively, pre-heating the liquid to a temperature which is near to the upper operational temperature range as specified by the manufacturer will ensure that thermal expansion does not damage the tank. This means before sealing the tank, the oil should be roughly at a temperature higher than the warmest day of the year, typically between 50°C to 60°C.

When installed, the tank is adapted to absorb solar radiation from the sun. This is possible because the heat retaining liquid is a good absorber of energy, and works to absorb the solar energy 11 from the sun's rays, which is used to heat water in the pipe 10.

The screen sheet 2 comprises a solar light permissible / transmissive sheet adapted to allow solar energy 11 to be absorbed by the tank, then enter the interior chamber 4 of the tank from the outside of the tank, the solar radiation passing through the screen sheet 2. Behind the screen sheet 2 is the solar absorption surface. The screen transmits solar energy to the absorption surface, as solar energy in the form of visible light and higher frequencies passes through the screen, whilst the screen is opaque to infra - red light. The screen sheet can be held in place using brackets (not shown), or can be fixed to the tank using glue. Alternatively, a suitable frame, case, or fixing method can be employed. The screen sheet 2 can be made from a substantially transparent sheet of glass or plastics material, although other suitable materials or composites can also be used. In order to allow as much solar radiation as possible to reach the tank, the screen sheet 2 should be disposed on an upper side of the tank, preferably on the top of the tank, where it will most readily be exposed to sunlight. A substantially translucent sheet of glass or plastics material can also be used as an alternative.

In a preferred embodiment, the tank is formed of aluminium, or is encased in an aluminium outer casing. The solar water heater may comprise mounting brackets attached directly to the casing or to an outer frame around the tank or it's outer casing to enable the solar water heater to be attached to a boat or other like marine vessel.

In one embodiment, the screen sheet 2 comprises a double glazed sheet of Perspex^{(RTM)} that is affixed to the tank using epoxy glue, and which is cured with heat. The double glazing will minimise heat-loss, whereas the heat curing ensures a more heat-resistant seal. This is important in order to minimise heat-loss, because the efficacy of the solar heater will be largely determined by its ability to not only absorb solar radiation, and transfer it to heat the water in the pipe, but also by its ability to prevent heat loss.

The pipe 10 is an elongate hollow metal pipe such as copper pipe having an inlet 5 at one end, and an outlet 8 at another end. In order to facilitate heat absorption, a significant surface area is desirable. This is provided by designing the metal pipe to have several windings, between the inlet 5 and outlet 8, so that the pipe articulates through the inner chamber 4 several times, to be in contact with the liquid heat store (for example oil), and to pass through a volume of the inner chamber 4. The length of pipe winding through the space of the interior chamber maximizes the surface area available for heat transfer from the heat retaining material to the surface of the pipe 10, and from the surface of the pipe 10, to any fluid that may be within the pipe means. Note that the heat retaining material is in fluid isolation from the interior of the pipe 10. Thus, if using oil as the heat retaining material, the oil and the water do not mix.

A metal pipe, for example a copper pipe, can be used for the pipe 10 and is preferably articulated within the chamber to form a coil. Preferably the metal has good high thermal conductivity so that heat is efficiently transferred from the heat retaining liquid through the walls of the pipe to the water contained therein. Copper has good thermal conduction properties. Further, copper has natural anti-microbial properties which are desirable in preventing bacteria such as legionella pneuomophila bacteria establishing a foothold inside the pipe 10. For greater energy transmission, a copper mesh (not shown) can be used to wrap around part or the whole of the pipe 10, to help in transferring more of the heat from the heat retaining liquid to the pipe 10 coil.

Referring to figure 4, the tank can be designed such that the heat storage tank is formed around the perimeter of the solar absorption surface, to ensure that a reduced area of the tank is exposed to the screen means, since conventional screen technology tends to have greater heat loss than rigid insulation. This would increase the insulation around the perimeter of the tank containing the heat storage liquid, thereby reducing heat loss from the heat retaining liquid. Further, such a construction protects the water in the pipework from freezing in freezing temperatures.

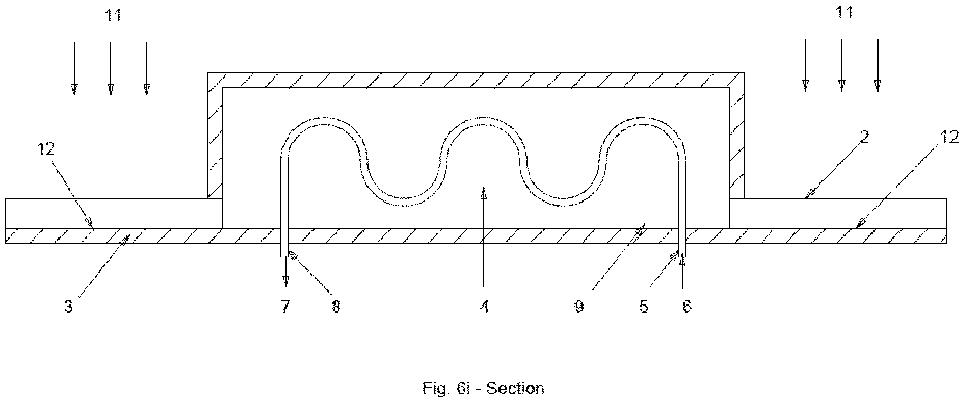

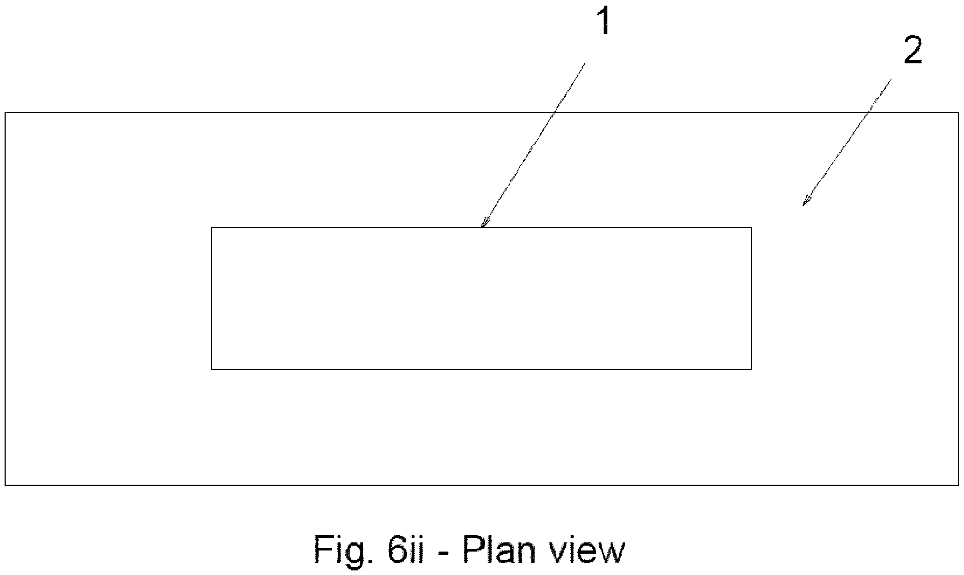

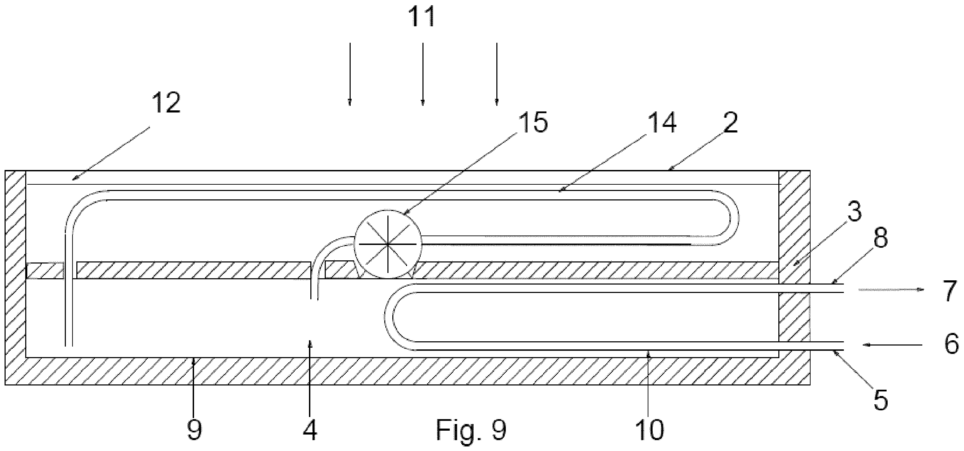

A different way of facilitating solar energy absorption and reducing heat loss is shown in figure 6, where a solar absorption surface 12 with an increased surface area, surrounds an insulated section of the interior chamber. Alternatively, a pump 15 (figure 9) can be used circulate the heat retaining liquid from beneath the screen sheet 2 towards the bottom section of the interior chamber 4. Here an insulation baffle may be provided within the interior chamber (figure 9) to minimise heat loss. The pump may be powered by photovoltaic cells, a battery or by another suitable energy source.

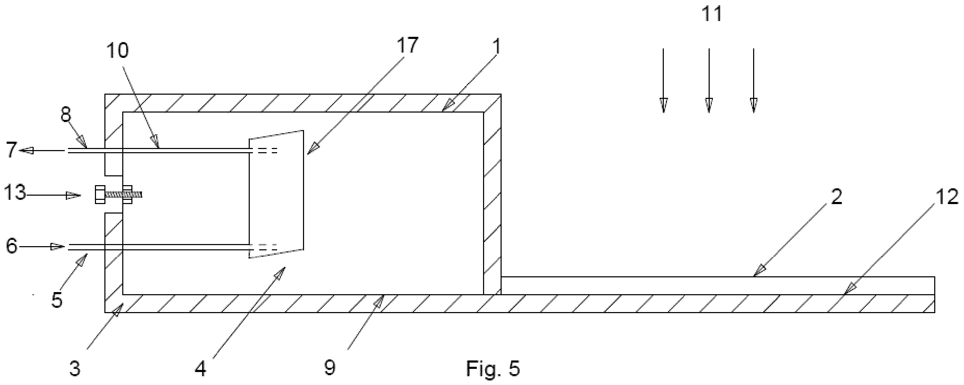

Figure 5 shows a preferred embodiment of the solar water heater, which includes a plate heat exchanger 17 within the inner chamber 4 to improve and facilitate heat exchange between the heat retaining liquid and the water in the pipe 10. Further, there is a solid material connection between the tank 1 and the screen sheet 2. In this embodiment, the tank 1 is on only on one edge of the solar absorption surface, but with a solid material connection between the tank 1 and the solar absorption surface, to enable transfer of heat energy between the two. This can reduce heat loss, since the heat retaining material is substantially encapsulated by insulation. A bolt 13 can be used to seal the heat retaining material within the interior chamber 4.

In use, and in an installed state atop a caravan, or on the roof of a boat, in view of the sun, a water source such as a pipe from a cold water supply can be connected to the inlet 5 to supply water into the pipe passing through the tank 1. As the sun's energy is transferred to the interior chamber 4, the heat retaining liquid will be heated by the solar energy, and will retain it, transferring the heat into the water that is in the inside of the copper pipe 10. When a user needs to take a shower, or draw hot water from the tank, a valve of the tap or shower can be opened, to let out the heated water. As hot water leaves the outlet 8, cold supply water passes through the inlet 5. This new cold supply continues to absorb heat from the device, emerging a short time later as hot water from the outlet 8. It is notable that since there is no water storage tank involved, if potable water enters the pipe, potable water will exit. This potable water will be able to be extracted at higher temperatures than the temperature at which it entered the solar water heater.

In order to improve the insulation of the tank 1, the outer surface of the tank 1, except that which is in contact with the screen, is covered with an insulation layer 3, disposed generally adjacent each surface. The insulation layer can comprise a high density inorganic and fire-resistant insulation material such as mineral wool (rock wool) insulation board or can comprise a fibrous material such as glass wool. Alternatively, a cellular material such as calcium silicate or cellular glass can also be used.

While the insulation can cover most of the enclosure, the insulation must leave the screen part of the tank clear, and must not obstruct the screen from exposure to solar radiation.

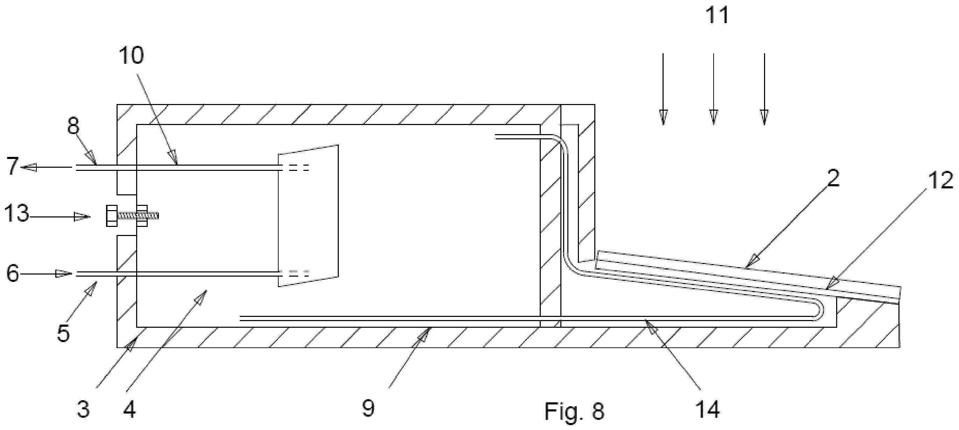

Figure 8 shows a solar water heater whereby the heat retaining liquid is circulated past the solar absorption surface. Conventional channels or pipework 14 may be provided, which can be attached to the solar absorption surface around the perimeter of the solar absorption surface, to facilitate heat transfer from the heat absorption plate to the interior chamber 4.

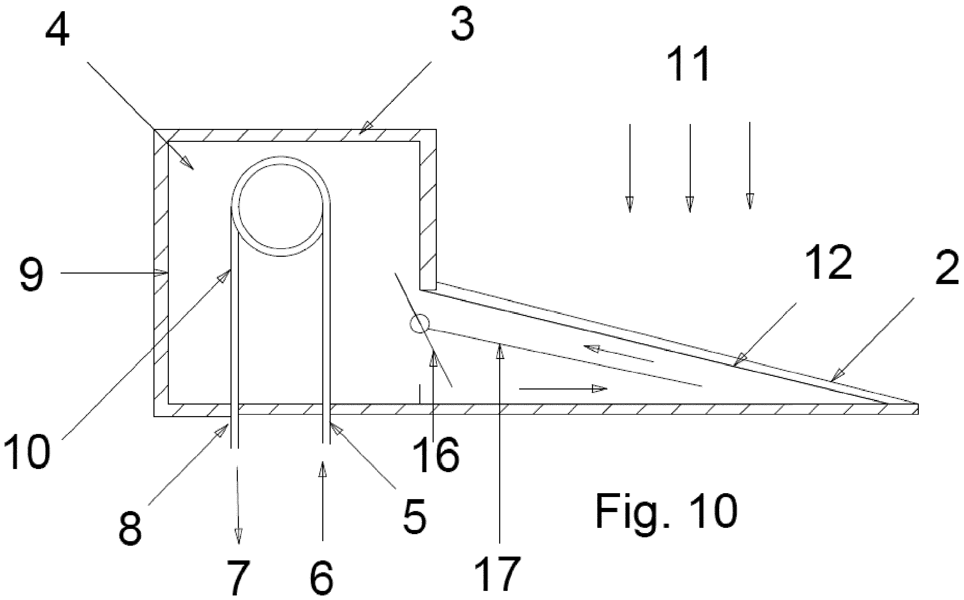

To reduce heat loss, a valve (figure 10) can be installed to prevent backflow or restrict fluid flow when solar energy is not being received. This means that the valve 16 allows flow of heat retaining liquid into the inner chamber 4 when the solar water heater is receiving solar energy 11, but the valve 16 restricts heat loss at other times.

A further consideration is the sealing between the pipe and the body of the tank 1. Since a copper metal pipe 10 is the preferred option, seals can be made around the holes that are created for the metal pipes inlet 5 and outlet 8 by using a brass compression coupling such as a 8mm, or 10mm diameter as appropriate depending on the diameter of pipe used. Preferably 8mm pipe & straight couplings are used. Preferably PTFE tape is used between the coupling and tank as a dielectric insulator to prevent corrosion between the tank and pipe.

Silicone sealant and a compression ring can also be used to complete the seal. Alternatively, welding, soldering or another sealing technique can be used to create an airtight and watertight seal.

In a preferred embodiment, the tank comprises an insulated heat storage apparatus that is in heat conducting communication with a Solar absorption surface (figure 4) using a suitable heat conductor. Alternatively, the plate is provided with hollow stainless steel tubes or insulated flexible piping which carries a heat retaining liquid such as oil, from the plate to the storage tank, which may be away from the plate. The surface absorbs solar energy and transfers it to the tank, to heat the liquid in the tank. The plate may be covered with black powder coating to improve its solar absorption properties. A glass or Perspex^{(RTM)} screen may be provided that is affixed on an upper facing flat surface of the plate to reduce heat loss from the plate. It is not essential that the surface be flat. Instead that it presents sufficient surface area, for exposure to the sun's rays, to allow sufficient subsequent solar absorption.

The self-contained solar water heater enables a suitable liquid, to be used as a heat storage medium without the need for a hot water storage tank to store the water that will be heated, and without the need of an electric energy source. Thus, as potable water enters the pipe inlet 5, it will be "instantly" heated, before exiting the pipe outlet 8, using only the energy from the sun. This means, it is an eco-friendly heater that does not use non-renewable energy sources to heat potable water.

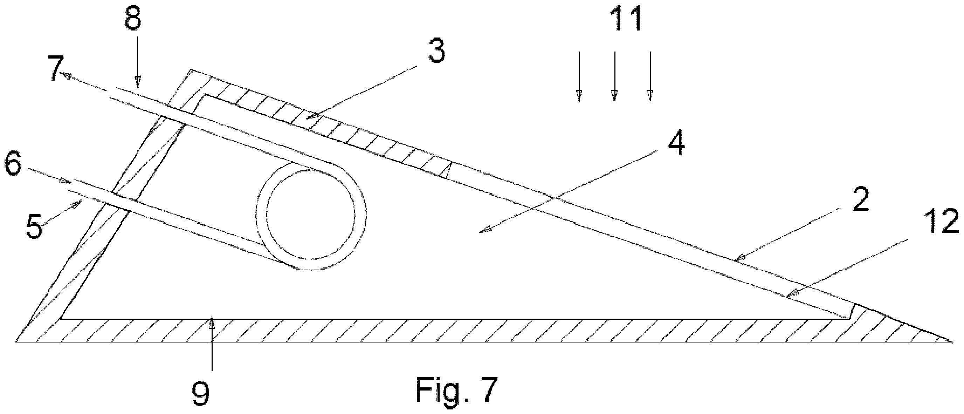

The substantially flat design minimises wind resistance against the tank. This is particularly useful for boats, so as not to inadvertently reduce their speed, and for land vehicles to reduce the associated wind noise. To minimise wind resistance, an embodiment of the tank can be designed to be substantially wedge-shaped (figure 7), or additions could be made to the casing to allow a more streamlined form.

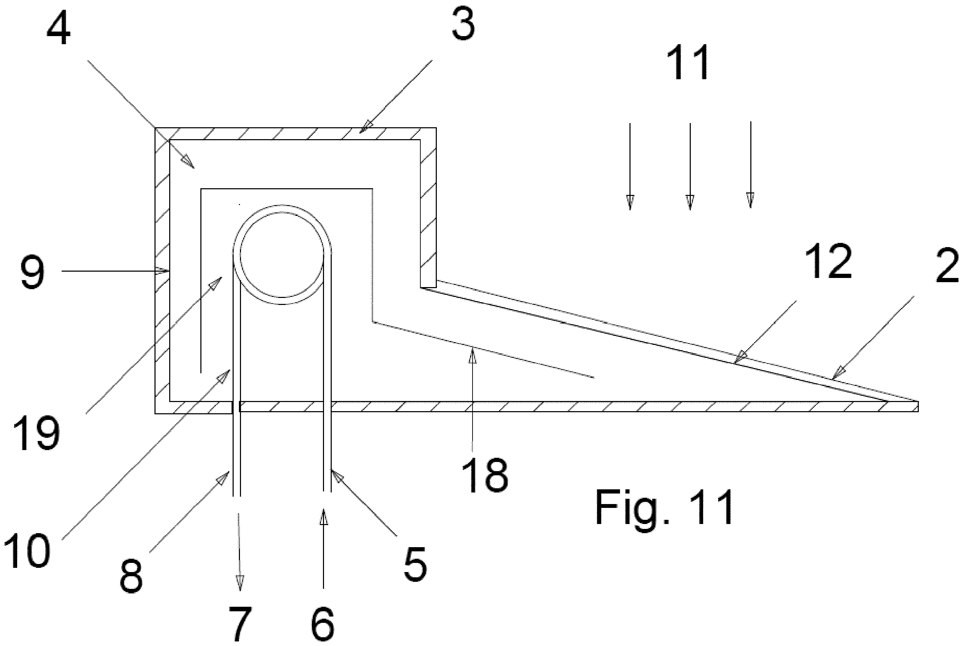

In a preferred embodiment (figure 11), the solar water heater may be provided with an inner enclosure 18, which acts as a barrier for fluid 19 within the inner enclosure 18 from moving beyond the inner enclosure18, into the rest of the interior chamber 4. This has advantages in sub-zero temperatures, because if a suitable heat retaining liquid such a peanut oil (which becomes solid below three degrees Celsius) is used, the liquid held outside the inner enclosure will freeze into a solid mass as freezing temperatures are reached, preventing the ability of the substance in that area to move or circulate heat, thereby becoming predominantly, an insulator. The heat retaining liquid 19 within the inner enclosure 18 can retain a measure of heat to protect the pipe 10 from freezing.

The water in the pipe will freeze at pipe temperatures of 0°C or lower. In some embodiments, the heat retaining liquid may solidify at temperatures above the freezing point of water so that the solidified heat retaining material acts as a thermal insulator to protect the internal pipework of the solar water heater at temperatures where water is likely to freeze. For example if peanut oil is used as the heat retaining liquid, the liquid range of that substance is around 3°C to 232 °C

The presently disclosed embodiments provide the advantages of using a liquid as the heat retaining and heat transfer material. Compared to use of the phase change material, permanent liquid provides a smaller change in volume which is a requirement for a sealed tank which will be swaying around on a marine vessel, and the better thermal flow characteristics of using a substance which remains liquid and therefore will not insulate the pipe as it is cooled.

In the presently disclosed embodiments, preferably the pipe comprises around a 12m length of 8mm diameter copper pipe within the chamber, which may hold 10 litres of heat retaining liquid, preferably oil. So, in preferred embodiments, the pipe will occupy around 0.6 litres of the chamber.

The embodiments described herein may receive input water flow which is initially potable, and due to the continuous flow of the water through the pipe water is not left standing still in the solar water heater for any length of time which would promote growth of pathogens, and, the water emerges in a potable condition at the outlet. If non - potable water is inlet into the pipe, the heating action of the solar water heater may convert previously unpotable water to potable water, particularly if the water approaches boiling point, or a temperature high enough to kill pathogens present in the inlet water feed.

The embodiments described herein may receive water at the water inlet that is either already potable, or that is not potable. In the case of a non-potable water inlet feed, potable water may be output from the water outlet. Under sunny conditions, small amounts of water could be heated to 100 degrees, which would kill most virus and bacteria. Any of the embodiments may be provided with a tap on the outlet of the pipe which should push out enough boiling water for two mugs of tea.

In the above embodiments, preferably the water carrying pipe follows a path which allows it to drain from the outlet when left standing, so that when the solar water heater is not in use for delivering water pipework is empty of water. Because there is no standing water in the pipework of solar water heater when not in use, this avoids growth and formations of pathogens in water within the pipe.

The embodiments described herein may be of use for sterilising water. Optionally, in various embodiments, the inlet feed to the pipe may comprise a filter to filter out particles, and solids from the inlet water feed. In some embodiments, the inlet water feed may be pre - filtered and include an ultraviolet light which shines through the inlet water to assist in killing any living pathogens within the inlet water feed. The ultraviolet light may be run from an electrical system a marine vessel, or maybe run from a battery.

In the above description, any technical feature of one embodiment may be substituted for an equivalent feature of any other embodiment herein, and any technical feature present in one embodiment may be added to or combined with any other embodiment except where the context specifically states otherwise. Any claimed feature described herein may be added to any embodiment described herein except where specifically stated otherwise

## Claims

1. A self-contained solar water heater for producing potable hot water, said water heater comprising:
a tank having a plurality of inner surfaces and a plurality of outer surfaces;
said tank having an interior chamber formed within it;
an insulation layer disposed adjacent a portion of the tank's outer surfaces;
the tank being provided with a screen disposed on at least one said surface;
the screen being adapted to allow solar energy onto at least one surface of the said tank onto which the screen is disposed, to allow said solar energy to be absorbed by said surface;
a heat retaining liquid which can retain heat from said solar energy, said heat retaining liquid being contained within said interior chamber;
said heat retaining liquid remaining liquid over a temperature range of 30°C to 95°C; and
a pipe which winds through said interior chamber and through said heat retaining liquid;
wherein in use the pipe is adapted to receive water that can be fed into it from a water source, the water flowing through the pipe to be heated by said solar energy which is absorbed by said tank's surface and which is transferred as heat energy to the pipe by said heat retaining liquid.

2. The self-contained solar water as claimed in claim 1, wherein the heat retaining liquid has a freezing point temperature at atmospheric pressure selected from the set -40°C; -3°C; -17°C; 0°C; 5°C; 7°C; 10°C; 15°C; 20°C; 25°C; 30°C and a boiling point temperature at atmospheric pressure selected from the set 95°C; 100°C; 104°C; 130°C; 160°C; 190°C; 200°C; 227°C.

3. The self-contained solar water heater as claimed in claim 1, wherein said heat retaining liquid remains liquid at atmospheric pressure over a temperature range selected from the set: 25°C to 99°C; 20°C to 99°C; 15°C to 99°C; 10°C to 99°C; 7°C to 99°C; 0°C to 100°C; 5°C to 200°C; -3°C to 200°C; -17°C to 227°C; - 40°C to 190°C.

4. The self-contained solar water heater as claimed in any one of the preceding claims, wherein said heat retaining liquid comprises a substance containing nanoparticles.

5. The self-contained solar water heater as claimed in any one of the preceding claims, further comprising a mesh within the interior chamber and located adjacent said pipe.

6. The self-contained solar water heater as claimed in the preceding claims, wherein said heat retaining liquid comprises graphene particles and/or crystals in suspension in said liquid, and/ or particles of phenol formaldehyde compounds.

7. The self-contained solar water as claimed in any one of the preceding claims, wherein said heat retaining liquid comprises a viscous liquid selected from the set: mineral oil; synthetic oil; sunflower oil; peanut oil; glycol; a glycol based liquid; ethylene glycol; an ethylene glycol based liquid; any other suitable oil or liquid which remains liquid over the temperature range specified in claim 1.

8. The self-contained solar water heater as claimed in any one of the preceding claims, wherein said screen comprises multiple layers of sheet material, in a single unit separated by a gas, a vacuum, or a layer of thermally insulating material.

9. The self-contained solar water heater as claimed in any one of the preceding claims, wherein said pipe comprises at least one sealed plate within said interior chamber; said plate having a hollow portion with an inlet and an outlet, through which water may flow.

10. The self-contained solar water heater as claimed in claim any one of the preceding claims, wherein said pipe comprises at least one sealed plate for use in transferring heat from said heat retaining liquid to water that is in a hollow portion of said plate.

11. The self-contained solar water heater as claimed in any one of the preceding claims, wherein said pipe comprises an inlet for inlet of water and an outlet for outlet of water.

12. The self-contained solar water heater as claimed in any one of the preceding claims, wherein said pipe has a substantially planar shape.

13. The self-contained solar water heater as claimed in any one of the preceding claims, comprising one or a plurality of fins attached to said pipe for improving heat transfer to said pipe.

14. The self-contained solar water heater as claimed in any one of the preceding claims, which allows extraction of potable water.

15. A self-contained solar water heater for producing potable hot water, said water heater comprising:
a tank having a plurality of inner surfaces and a plurality of outer surfaces;
said tank having an interior chamber formed within it;
an insulation layer disposed adjacent a portion of the tank's outer surfaces;
the tank being provided with a screen disposed on at least one said surface;
the screen being adapted to allow solar energy onto said at least one surface of the tank onto which the screen is disposed, to allow said solar energy to be absorbed by said surface;
a heat retaining liquid which can retain heat from said solar energy, said heat retaining liquid being contained within said interior chamber;
wherein said heat retaining liquid would already be in a liquid state at ambient air temperatures at sunrise when in situ; and
wherein said heat retaining liquid does not then change phase during the storage of solar energy; and
a pipe which winds through said interior chamber and through said heat retaining liquid;
wherein in use the pipe is adapted to receive water that can be fed into it from a water source.
